# EUROPÄISCHE PATENTSCHRIFT

(11) **EP 2 345 558 B1**
(45) Veröffentlichungstag und Bekanntmachung des Hinweises auf die Patenterteilung: **17.04.2013**
(21) Anmeldenummer: 11000188.0
(22) Anmeldetag: 12.01.2011
(51) Int. Cl.: B60R 9/06, B60R 9/10, B60R 9/058, B60D 1/52, B60D 1/64

(54) **Spannvorrichtung für einen Kraftfahrzeug-Träger oder für eine Anhängekupplung**
Tensioning device for a motor vehicle holder or a trailer coupling
Dispositif de serrage pour un support de véhicule automobile ou pour un attelage

(30) Priorität: 16.01.2010 DE 202010001015 U
(43) Veröffentlichungstag der Anmeldung: 20.07.2011
(73) Patentinhaber: WESTFALIA - Automotive GmbH, 33378 Rheda-Wiedenbrück (DE)
(72) Erfinder: Peitz, Jürgen, 33378 Rheda-Wiedenbrück (DE)
(74) Vertreter: Bregenzer, Michael

(56) Entgegenhaltungen:
- EP-A1- 1 095 820
- WO-A1-2006/057028
- DE-A1-102008 012 689
- DE-U1- 9 214 916

## Beschreibung

Die Erfindung betrifft eine Spannvorrichtung für einen Kraftfahrzeug-Träger, insbesondere einen Fahrradträger, oder eine Anhängekupplung, mit einem Zuganker und einer auf diesen aufschraubbaren Mutteranordnung, die drehbetätigbar ist und einen mit einem Zuganker-Gewindeabschnitts des Zugankers kämmenden ersten Gewindeabschnitt aufweist, um sie entlang einer Spannachse axial zu einem Widerlagerkörper hin in eine Spannstellung oder von diesem weg in eine Lösestellung zu verstellen, wobei zwischen dem Widerlagerkörper und der Mutteranordnung ein Distanzkörper angeordnet ist.

Eine derartige Spannvorrichtung ist beispielsweise bei einem Kraftfahrzeug-Träger zum Transportieren von Fahrrädern vorgesehen, der eine Kupplungshalterung zur Befestigung an einer Anhängekupplung des Kraftfahrzeuges aufweist. An einem Gestell des Kraftfahrzeug-Trägers ist z.B. ein schwenkbarer Bügel vorgesehen, der mittels der Spannvorrichtung in seiner Gebrauchsstellung, bei der er im Wesentlichen rechtwinkelig zur Grundgestell des Kraftfahrzeug-Trägers steht, gespannt werden kann. Bei Nichtgebrauch kann man den Bügel umlegen, so dass er wenig Platz benötigt. Ein solcher Kraftfahrzeug-Träger ist beispielsweise in DE 10 2008 012 689 beschrieben. DEU 9214916.2 offenbart eine Spannvorrichtung gemäß dem Oberbegriff des Patentanspruchs 1. Spannvorrichtungen dieser Art werden aber auch dazu verwendet, beispielsweise Fahrräder an dem vorgenannten Bügel zu befestigen.

Dazu sind an dem Bügel beispielsweise Klemmschellen angeordnet, von denen Distanzstäbe abstehen, die wiederum Spannklammern halten. Die Spannklammern können in ihrer Klammerstellung oder Klemmstellung beispielsweise Rahmenteile des zu haltenden Fahrrades klammern.

Der Distanzkörper ist beispielsweise eine Unterlagscheibe.

Beim Fahrbetrieb eines Kraftfahrzeuges treten jedoch Vibrationen auf. Diese können dazu führen, dass sich eine Spannvorrichtung löst. Daher sind die Gewinde so ausgestaltet, dass sie zumindest eine gewisse Selbsthemmung aufweisen. Daraus ergibt sich die Konsequenz, dass verhältnismäßig viele Umdrehungen notwendig sind, um die Spannvorrichtung aus ihrer Spannstellung in die Lösestellung und umgekehrt zu verstellen. Die Bedienung ist daher unbequem.

Es ist daher die Aufgabe der vorliegenden Erfindung, eine Spannvorrichtung für einen Kraftfahrzeug-Träger oder eine Anhängekupplung bereitzustellen, die bei einfacher Bedienung ein optimales Spannen ermöglicht.

Zur Lösung der Aufgabe ist bei einer Spannvorrichtung der eingangs genannten Art vorgesehen, dass der Distanzkörper einen Distanzkörper-Gewindeabschnitt mit einer zu der ersten Drehrichtung entgegengesetzten Drehrichtung aufweist, mit dem ein zu dem ersten Gewindeabschnitt koaxialer zweiter Gewindeabschnitt der Mutteranordnung kämmt, und dass zwischen dem Distanzkörper und einem Gegenhalt, insbesondere dem Widerlagerkörper, ein entgegen einer Drehbetätigung wirksamer Reibschluss und/oder Formschluss vorhanden ist, so dass sich die Mutteranordnung bei einer Drehbetätigung simultan an dem Distanzkörper und dem Zuganker entlang schraubt und dadurch eine Distanz zu dem Widerlagerkörper entlang der Spannachse verändert.

Ein Grundgedanke der Erfindung ist es, dass bei einer Drehbetätigung der Mutteranordnung nicht nur der Bewegungshub genutzt wird, der zwischen dem Zuganker-Gewindeabschnitt und dem ersten Gewindeabschnitt der Mutteranordnung vorhanden ist, sondern zusätzlich auch der weitere Bewegungshub oder die weitere axiale Verstellung, die durch den Distanzkörper-Gewindeabschnitt sowie den mit diesem kämmenden zweiten Gewindeabschnitt der Mutteranordnung zu nutzen. Dadurch sind verhältnismäßig wenige Umdrehungen notwendig, um die Spannvorrichtung zu lösen oder zu spannen. Zugleich kann jedoch die Steigung der Gewindeabschnitte so gestaltet sein, dass eine gewisse Selbsthemmung vorhanden ist.

Nun ist es möglich, den ersten und zweiten Gewindeabschnitt an ein und demselben Bauteil der Mutteranordnung, beispielsweise einer Mutter, vorzusehen. Eine Ausgestaltung der Erfindung kann aber auch vorsehen, dass der erste Gewindeabschnitt an einer Mutter der Mutteranordnung angeordnet ist, während der zweite Gewindeabschnitt an einem Schraubkörper der Mutteranordnung vorgesehen ist, der mit der Mutter drehfest verbunden ist. Der Schraubkörper kann beispielsweise eine polygonale oder eine sonstige Drehfestigkeit bereitstellende Aufnahme aufweisen, in der die Mutter drehfest, zumindest jedoch mit einem nicht zu großen Drehspiel, aufgenommen ist. Dies ermöglicht es beispielsweise, eine konventionelle Mutter, beispielsweise mit einem M8- oder M10-Gewinde, zu verwenden.

Der Schraubkörper kann beispielsweise von einem Hülsenkörper gebildet sein oder einen Hülsenkörper aufweisen, der vom Zuganker durchdrungen ist. Am Außenumfang des Hülsenkörpers ist der Distanzkörper-Gewindeabschnitt angeordnet.

Dieser Hülsenkörper kann aber auch integral mit der Mutter verbunden sein oder durch ein einziges Bauteil gebildet sein.

In beiden vorgenannten Fällen ist es möglich, dass die Mutteranordnung einen vor den Hülsenkörper radial außen vorstehenden Vorsprung aufweist, beispielsweise einen Kragen, einen Ringvorsprung oder Ringsegmentvorsprünge, die zum Abstützen an dem Widerlagerkörper vorgesehen sind. Dadurch wird die Stützfläche der Mutteranordnung bezüglich des Widerlagerkörpers vergrößert.

Der erste Gewindeabschnitt der Mutteranordnung wird beispielsweise von einem Rechtsgewinde gebildet oder weist ein Rechtsgewinde auf, während der zweite Gewindeabschnitt ein Linksgewinde bildet. Es versteht sich, dass auch die umgekehrte Anordnung getroffen sein kann.

Weiterhin ist es möglich, dass der erste und zweite Gewindeabschnitt unterschiedliche Steigungen aufweist, wobei gleiche Steigungen bevorzugt sind.

Weiterhin ist es bevorzugt, wenn der erste und der zweite Gewindeabschnitt unterschiedliche Durchmesser aufweisen. Es versteht sich, dass eine koaxiale Anordnung getroffen sein kann, bei der die beiden Gewindeabschnitte hintereinander angeordnet sind und bei dieser Ausgestaltung auch die gleichen Durchmesser aufweisen können. Dies ist jedoch im Ausführungsbeispiel gemäß der Zeichnung nicht dargestellt.

Der Distanzkörper und der Widerlagerkörper haben zweckmäßigerweise zueinander passende Formschlusskonturen, beispielsweise Formschlussaufnahmen und Formschluss-Vorsprünge, oder auch Drehanschläge. Bei den Drehanschlägen ist anzumerken, dass sie beispielsweise in einem geringen Umfang optional ein Drehspiel ermöglichen können. Somit kann beispielsweise eine schlagende Spannbewegung möglich sein, so dass beispielsweise in Umfangsrichtung ein Drehspiel ausgenutzt wird, um sozusagen Schwung zu holen, um die Spannvorrichtung zu spannen oder zu lösen.

Der vorgenannte Reibschluss, der zwischen Distanzkörper und dem Gegenhalt, insbesondere dem Widerlagerkörper, ebenfalls möglich ist, kann beispielsweise durch eine Kunststoffbeschichtung, eine Gummierung oder dergleichen realisiert sein. Diese kann am Distanzkörper und/oder am Gegenhalt, insbesondere am Widerlagerkörper, vorgesehen sein.

Der Widerlagerkörper weist zweckmäßigerweise zum formschlüssigen Halten des Distanzkörpers mindestens einen bezüglich des Zugankers radial verlaufenden Vorsprung oder mehrere sternförmige Vorsprünge zum Eingriff in Ausnehmungen des Distanzkörpers auf. Es ist aber auch möglich, dass beispielsweise der Distanzkörper derartige Vorsprünge oder einen solchen Vorsprung aufweist, der korrespondierend in eine Aufnahme oder in mehrere Aufnahmen des Widerlagerkörpers eingreift. Weiterhin ist auch eine Kombination der vorgenannten Formschlusskonturen möglich, bei der der Distanzkörper und der Widerlagerkörper jeweils Vorsprünge und jeweils Aufnahmen aufweisen.

Mindestens eine Formschlusskontur des Widerlagerkörpers oder der Mutteranordnung wird zweckmäßigerweise durch eine Verstärkungsrippe gebildet. So ist sozusagen ein Doppelnutzen dadurch geschaffen, dass einerseits durch die Verstärkungsrippe der jeweilige Körper, beispielsweise der Widerlagerkörper oder ein Bauteil der Mutteranordnung, verstärkt ist, und die Verstärkungsfunktion dieser Rippe zusätzlich dazu genutzt wird, einen Formschluss oder auch einen Drehanschlag zwischen einerseits der Mutteranordnung und andererseits den Widerlagerkörper bereitzustellen.

An dieser Stelle sei bemerkt, dass der Widerlagerkörper zwar den bevorzugten Gegenhalt für den Distanzkörper darstellt. Es ist aber auch möglich, dass dieser von anderen Komponenten drehfest gehalten wird, beispielsweise von einem sonstigen Bauteil des Kraftfahrzeug-Trägers oder der Anhängekupplung, bezüglich dessen der Distanzkörper zwar drehfest ist, aber eine axiale Verschiebung entlang der Spannachse durchlaufen kann, also axial verschieblich ist.

Ein Stützflächenbereich der Mutteranordnung zum Abstützen an dem Widerlagerkörper ist beispielsweise an einer konischen Aufnahme vorgesehen. Dementsprechend hat der Widerlagerkörper bei dieser Ausgestaltung der Erfindung zweckmäßigerweise einen konischen Vorsprungbereich, der in diese vorgenannte konische Aufnahme eingreift.

Der erste Gewindeabschnitt der Mutteranordnung ist zweckmäßigerweise ein Innengewindeabschnitt, während der zweite Gewindeabschnitt ein Außengewindeabschnitt ist. Es versteht sich, dass auch die umgekehrte Konfiguration getroffen sein kann.

Der Zuganker ist zweckmäßigerweise bezüglich des Widerlagerkörpers drehfest festgelegt. Beispielsweise legt der Widerlagerkörper selbst den Zuganker drehfest fest. Es ist aber auch möglich, dass der Zuganker in der Umgebung des Widerlagerkörpers drehfest festgelegt wird, so dass der Widerlagerkörper selbst keine Drehfestigkeit bereitstellen muss.

Der Zuganker umfasst zweckmäßigerweise einen Spannbolzen. Der Spannbolzen hat zweckmäßigerweise an seinem von dem Zuganker-Gewindeabschnitt entfernten Ende einen Widerlagervorsprung, der sich an dem Widerlagerkörper zumindest indirekt oder auch direkt abstützt.

Der Widerlagerkörper wird zweckmäßigerweise von dem Zuganker durchdrungen. Es ist aber auch möglich, dass der Zuganker einen Bestandteil des Widerlagerkörpers bildet. Beispielsweise steht der Zuganker bzw. der Gewindeabschnitt desselben vor den sonstigen Bereich des Widerlagerkörpers vor.

Bevorzugt umfasst die Spannvorrichtung eine Spannklammer, wobei die Spannklammer mit der Mutteranordnung zwischen einer Klemmstellung und einer Freigabestellung verstellbar ist. Somit wird also die Spannklammer mit der Mutteranordnung gelöst oder geklemmt.

Die Spannklammer kann beispielsweise den Widerlagerkörper bilden. Beispielsweise ist eine Spannbacke der Spannklammer der Widerlagerkörper. Es ist aber auch möglich, dass zwischen der Spannklammer und dem Widerlagerkörper ein weiteres Bauteil, beispielsweise eine Distanzhülse oder dergleichen, angeordnet ist.

Die Spannklammer ist zweckmäßigerweise als eine Klemmschelle ausgestaltet. Die Spannklammer weist zweckmäßigerweise ein Drehlager für ein zu spannendes, von der Spannklammer aufgenommenes Bauteil auf. Das Bauteil ist bezüglich der Spannklammer in der Lösestellung der Spannvorrichtung drehbar, während in der Spannstellung eine Drehfestigkeit vorhanden ist. Somit kann das Drehlager sozusagen zwischen einer Drehfestlegungsstellung und einer Freigabestellung mit Hilfe der Spannvorrichtung verstellt werden.

Bevorzugt weist das Drehlager eine Steckaufnahme für das zu spannende Bauteil. Somit ist es möglich, das zu spannende Bauteil nicht nur zu drehen, sondern gegebenenfalls auch zu entnehmen.

Das zu spannende Bauteil ist beispielsweise eine Stange oder ein Bügel eines Kraftfahrzeug-Trägers. Der Bügel ist beispielsweise U-förmig. Der Bügel kann zwischen einer Gebrauchsstellung, in der er vor ein Gestell des Kraftfahrzeug-Trägers vorsteht, und einer Ruhestellung verstellt werden. Die Spannvorrichtung legt den Bügel zumindest in der Gebrauchsstellung fest, wenn sie in ihrer Spannstellung ist.

Ein Handgriffkörper ist zweckmäßigerweise mit der Mutter drehfest verbunden. Es ist auch möglich, dass die Mutter als Handgriffkörper ausgestaltet ist.

Der Handgriffkörper kann beispielsweise einen Schraubfortsatz aufweisen, der in den Distanzkörper eindringt. Es ist aber auch möglich, dass umgekehrt der Distanzkörper in den Schraubfortsatz eindringt.

Bevorzugt weist der Handgriffkörper einen Drehknauf auf. Der Handgriffkörper kann auch als ein Handrad ausgestaltet sein.

In einer bevorzugten Ausführungsform der Erfindung, weist ein Kraftfahrzeug-Träger, z.B. ein Heckträger oder ein Fahrradträger, mindestens eine der erfindungsgemäßen Spannvorrichtungen auf. Der Kraftfahrzeug-Träger kann beispielsweise als eine aus einem Heck des Kraftfahrzeugs ausziehbare Schublade ausgestaltet sein. Es ist aber auch möglich, dass der Kraftfahrzeug-Träger eine Halterung zur Befestigung an dem Kraftfahrzeug aufweist, z.B. eine Kupplungshalterung zur Befestigung einer Anhängekupplung.

Die Erfindung kann aber auch bei Dachträgersystemen oder Heckklappen-Trägersystemen Anwendung finden, die ein häufiges Lösen und Spannen erforderlich machen.

Weiterhin ist ein Anwendungsfeld der Erfindung eine Anhängekupplung, beispielsweise eine Betätigungsvorrichtung, mit der die Anhängekupplung verriegelbar oder entriegelbar ist.

Nachfolgend wird ein Ausführungsbeispiel der Erfindung anhand der Zeichnung erläutert. Es zeigen:
- Figur 1: eine perspektivische Schrägansicht eines Kraftfahrzeug-Trägers, der mit zwei erfindungsgemäßen Spannvorrichtungen, optional mit weiteren erfindungsgemäßen Spannvorrichtungen, ausgestattet ist,
- Figur 2: eine Querschnittsansicht eines Details A aus Figur 1, das eine der Spannvorrichtungen im Detail zeigt,
- Figur 3: eine Explosionsdarstellung einer im Vergleich zum Ausführungsbeispiel gemäß Figur 1 leicht modifizierten Spannvorrichtung gemäß der Erfindung, die in
- Figur 4: in zusammengeschraubtem Zustand dargestellt ist.

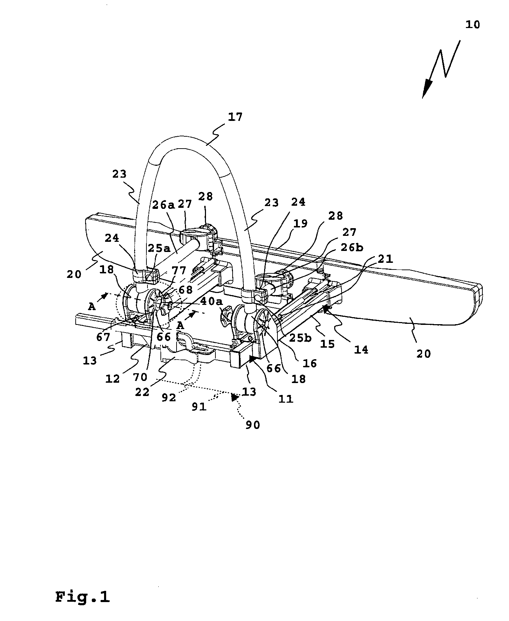

Ein in Figur 1 dargestellter Kraftfahrzeug-Träger 10 weist ein Grundgestell 11 auf, bei dem von einem Querträger 12 zwei Längsträger 13 abstehen, so dass insgesamt eine U-förmige Gestalt gebildet ist. Auf dem Grundgestell 11 ist ein Schwenkgestell 14 schwenkbar gelagert, das zwei neben, vorteilhaft parallel zu, den Längsträgern 13 verlaufende Schwenkträger 15 aufweist, an dessen freien Enden 16 ein Bügel 17 mittels Schwenklagern 18 schwenkbar gelagert ist. Die Schwenklager 18 ermöglichen es, den Bügel 17 in eine Nichtgebrauchsstellung zu schwenken, in der der Bügel 17 zu den Schwenkträgern 15 hingeschwenkt ist, oder in die in Figur 1 dargestellte Gebrauchsstellung, in der der Bügel 17 winkelig vom Schwenkgestell 14 absteht, vorliegend rechtwinkelig.

An den Enden 16 entgegengesetzten Enden der Schwenkträger 15 ist ein Kennzeichenträger 19 montiert, so dass insgesamt auch das Schwenkgestell 14 eine U-förmige Gestalt aufweist. Der Kennzeichenträger 19 und der Querträger 12 bilden jeweils die Grundseiten, die einander gegenüber liegen.

Am Kennzeichenträger 19 sind seitlich zwei Leuchtenträger 20 angeordnet, die in der Gebrauchsstellung im Wesentlichen mit dem Kennzeichenträger 19 fluchten, d.h. seitlich von diesem abstehen und insgesamt eine Art Querstruktur bilden, die jedoch in ihrer Nichtgebrauchsstellung in Richtung der beiden Schwenkträger 15 hingeschwenkt sind, so dass der Platzbedarf gering ist.

An der Oberseite der Schwenkträger 15 befinden sich Lager 21 zum schwenkbaren Lagern von in der Zeichnung nicht dargestellten Trägerkomponenten, insbesondere Rinnen zum Abstellen von Fahrrädern. Diese Rinnen können in eine Gebrauchsstellung geschwenkt werden, in der sie wie die beiden Leuchtenträger 20 seitlich vor das Grundgestell 11 vorstehen, und in eine Nichtgebrauchsstellung, in der sie im Zwischenraum zwischen den beiden Längsträgern 13 angeordnet sind.

Der Bügel 17 hat eine U-förmige Gestalt, wobei Schenkel 23 des Bügels 17 in den Schwenklagern 18 aufgenommen sind. An den Schenkeln 23 sind in der Zeichnung zwei Klemmschellen 24 befestigt, deren freie Enden von Zugankern 25a, 25b durchdrungen sind. Die Zuganker 25a, 25b durchdringen Distanzrohre 26a, 26b sowie weiterhin Spannklammern 27, die zweckmäßigerweise in ihre Offenstellung federbeaufschlagt sind. Die Spannklammern 27 können jeweils mit Spannmuttern 28 geschlossen werden, die auf die Zuganker 25a, 25b aufgeschraubt sind. Mit den Spannklammern 27 können beispielsweise Rahmen von Fahrrädern geklammert werden, die auf dem Kraftfahrzeug-Träger 10 abgestellt sind.

Der Kraftfahrzeug-Träger ist exemplarisch als ein Heckträger ausgestaltet. Nun könnte man einen solchen Heckträger in der Art einer Schublade ausgestalten, der aus dem Heck eines Kraftfahrzeuges ausziehbar ist. Der Kraftfahrzeug-Träger 10 ist jedoch mit einem Kraftfahrzeug 90 lösbar verbindbar. In seiner Gebrauchsstellung ist er an einem Heck 91 des Kraftfahrzeuges 90 befestigt. Beispielsweise hat der Kraftfahrzeug-Träger 10 eine Halterung 22 zur Befestigung an einer Anhängekupplung 92 des Kraftfahrzeuges.

Die beiden Schwenklager 18 sind vorliegend gleichartig ausgestaltet. Sie sind mit einer Spannvorrichtung 40a zwischen einer Klemmstellung, bei der sie den Bügel 17 drehfest festlegen, und einer Freigabestellung verstellbar, in der der Bügel 17 bezüglich des Schwenkgestells 14 schwenkbar ist.

Das Schwenkgestell 14 ist vom Heck 91 wegschwenkbar, so dass beispielsweise ein am Heck 91 vorgesehener Gepäckraum des Kraftfahrzeuges 90 leichter beladen werden kann, obwohl der Kraftfahrzeug-Träger 10 am Kraftfahrzeug 90 befestigt ist.

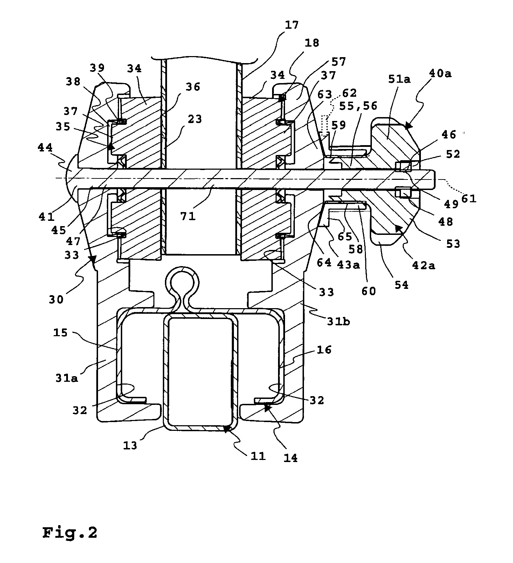

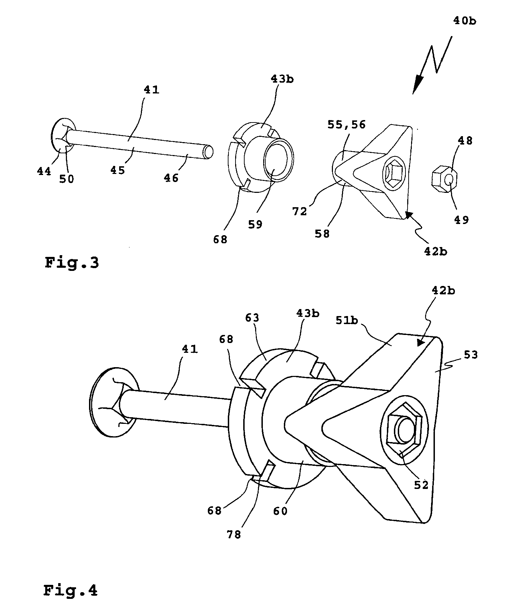

Die Spannvorrichtung 40a ist in den Figuren 1 und 2 dargestellt, während die Figuren 3 und 4 eine nahezu baugleiche, jedoch in Details abweichende Spannvorrichtung 40b zeigen. In der nachfolgenden Beschreibung sind unterschiedliche Komponenten der Spannvorrichtungen 40a, 40b mit den Kleinbuchstaben a oder b kenntlich gemacht, während gleiche Komponenten oder gleichartige Komponenten dieselben Bezugszeichen haben.

Weiterhin wird die Spannvorrichtung 40a beim Kraftfahrzeug-Träger in erster Linie bei den beiden Schwenklagern 18 eingesetzt, könnte aber - ebenso wie die Spannvorrichtung 40b - auch ohne Weiteres Anwendung bei den beiden die Zuganker 25a, 25b, sowie die Spannmutter 28 aufweisenden Haltevorrichtungen finden, was durch die nachfolgende Detailbeschreibung deutlich wird:

Die Schwenklager 18 umfassen jeweils zwei Spannklammern 30, deren Klammerschenkel 31a, 31b an den Schwenkträgern 15 befestigt sind. Zur Befestigung an den Schwenkträger 15 sind Aufnahmen 32 an den einander gegenüberliegenden Klammerschenkeln 31a, 31b vorgesehen.

Oberhalb der Aufnahmen 32 befinden sich Lageraufnahmen 33, in denen Lagerkörper 34 eines Drehlagers 35 drehbeweglich gelagert sind.

Die Lagerkörper 34 weisen eine Steckaufnahme 36 zum Einstecken von freien Enden des Bügels 17 auf. Die Lagerkörper 34 sind scheibenartig ausgestaltet. Die Steckaufnahme 36 wird beispielsweise von halbzylindrischen Aufnahmen an den Lagerkörpern 34 gebildet, die einander gegenüberliegen und somit insgesamt eine zylindrische Steckaufnahme bilden.

Der Bügel 17 ist durch ein im Wesentlichen zylindrisches Rohr gebildet, dessen freie Enden in die Steckaufnahmen 36 eingesteckt sind.

An der von der Steckaufnahme 36 abgewandten Seite haben die Lagerkörper 34 weiterhin Ringvorsprünge 37, die in korrespondierende Ringaufnahmen 38 an den beiden Klammerschenkeln 31, ganz konkret den Lageraufnahmen 33, eingreifen. Somit können die Lagerkörper 34 bezüglich der Klammerschenkel 31 zwar gedreht, jedoch axial von diesen entfernt werden. Vorzugsweise sind an den Ringaufnahmen 38 und/oder den Ringvorsprüngen 37 weiterhin Formschlusskonturen 39 vorgesehen, beispielsweise Zahnungen oder dergleichen, die ineinander eingreifen, wenn die Schwenklager 18 gespannt sind, den Bügel 17 mithin also drehfest festlegen. Wenn die Schwenklager 18 bzw. die Spannvorrichtungen 40a gelöst sind, gelangen die Formschlusskonturen 39 außer Eingriff, so dass der Bügel 17 bezüglich des Schwenkgestells 14 geschwenkt werden kann.

Das Spannen und Lösen der Spannvorrichtungen 40a, 40b ist in erfindungsgemäßer Weise besonders einfach und geht sehr schnell vonstatten, wobei zugleich ein fester Halt bzw. eine sichere Spannstellung erzielbar ist.

Die Spannvorrichtungen 40a, 40b weisen jeweils einen Zuganker 41 auf, auf den eine Mutteranordnung 42a, 42b, aufgeschraubt ist. Die Zuganker 41 durchdringen weiterhin Distanzkörper 43a, 43b, die zwischen der Mutteranordnung 42a, 42b und einem Stützvorsprung 44 des Zugankers 41 angeordnet ist.

Der Zuganker 41 der Spannvorrichtung 40a durchdringt zudem die beiden Klammerschenkel 31a, 31b, die Lagerkörper 34 sowie weiterhin (optional) ein jeweiliges freies Ende des Bügels 17.

Der Zuganker 41, bildet zudem einen Bestandteil der Schwenklager 18, insofern er eine Lagerachse 71 bereitstellt. Mithin schwenkt also der Bügel 17 an den Zugankern 41 schwenkbar gelagert.

Die Zuganker 41 weisen an einem freien Ende einen Stützvorsprung 44 auf, beispielsweise eine Art Schraubenkopf oder Schraubenteller, sowie einen Zuganker-Gewindeabschnitt 46 an einem Stangenabschnitt 45. Die Zuganker 41 bilden Spannbolzen 47.

Auf die Zuganker-Gewindeabschnitte sind Muttern 48, die einen ersten Gewindeabschnitt 49 aufweisen, aufgeschraubt. An den Stützvorsprüngen 44 sind Drehsicherungen 50 vorgesehen, die die Zuganker 41 verdrehgesichert halten, wenn die Mutter 48 aufgeschraubt wird. Beispielsweise sind die Drehsicherungen 50 als Mehrkantkonturen ausgestaltet, die in zu ihnen passende, sie formschlüssig aufnehmende Formschlussaufnahmen eingesteckt sind. Eine solche Formschlussaufnahme ist beispielsweise an der Spannklammer 30, z.B. am Klammerschenkel 31a, im Bereich der Einstecköffnung zum Einstecken bzw. Durchstecken des Zugankers 41 vorgesehen.

Nun könnte man in konventioneller Weise die beiden Klammerschenkel 31a, 31b durch Festziehen der Mutter 48 auf dem Spannbolzen 47 bzw. dem Zuganker 41 zusammenspannen oder zusammenklemmen, so dass diese die beiden Lagerkörper 34 in Richtung des Bügels 17 beaufschlagen und dieser im Drehlager 35 bzw. Schwenklager 18 drehfest gehalten wird. Dazu könnte man beispielsweise einen Handgriffkörper 51a, 51b drehen, der mit der Mutter 48 drehfest verbunden ist. Die Mutter 48 ist eine konventionelle Mutter, d.h. sie hat außen eine beispielsweise sechseckige Kontur, die in einer Formschlussaufnahme 52 formschlüssig aufgenommen ist. Der Zuganker 41 durchdringt den Handgriffkörper 51a, 51b sowie die in der Formschlussaufnahme 52 drehfest gehaltene Mutter 48 und steht beim Ausführungsbeispiel vor eine freie Stirnseite 53 des Handgriffkörpers 51a, 51b vor, wenn der Handgriffkörper 51a, 51b auf den Zuganker 41 aufgeschraubt wird. An dieser Stelle ist allerdings zu bemerken, dass selbstverständlich auch ein Handgriffkörper bei einer erfindungsgemäßen Spannvorrichtung vorgesehen sein kann, bei dem der Zuganker bzw. dessen Schraubende in eine sacklochartige Aufnahme eingreift, d.h. nicht vor die Stirnseite des Handgriffkörpers vorsteht.

Die bei den Ausführungsbeispielen gewählte Konfiguration ist allerdings sehr einfach zu montieren, da man die Mutter 48 lediglich in die Formschlussaufnahme 52 einlegt und sodann den Handgriffkörper 51a, 51b auf den Zuganker 41 aufschraubt.

In jedem Fall kann der Handgriffkörper 51a, 51b, der knaufartig ausgestaltet ist, bequem ergriffen und von einem Benutzer von Hand gedreht werden. Während der Handgriffkörper 51a als ein im Wesentlichen runder, Griffausnehmungen an seinem Außenumfang aufweisender Drehknauf 54 ausgestaltet ist, hat der Handgriffkörper 51b eine sternförmige Gestalt, d.h. sein Außenumfang ist im Wesentlichen dreieckig. Es versteht sich, dass die Ausgestaltung der Handgriffkörper 51a, 51b nur beispielhaft dargestellt ist.

Ein allein auf das Drehen der Mutter 48 auf dem Zuganker 41 beruhendes Spannen oder Lösen der Spannvorrichtungen 40a, 40b würde verhältnismäßig viele Umdrehungen des Handgriffkörpers 51a, 51b erfordern, da zweckmäßigerweise die Steigung der Gewindeabschnitte 46, 49 gering ist, um eine Selbsthemmung zu ermöglichen. Hier schafft die Erfindung wie folgt Abhilfe:

Bei den beiden Spannvorrichtungen 40a, 40b wird nämlich zusätzlich der Distanzkörper 43a, 43b dazu genutzt, eine Spanndistanz zwischen dem Klammerschenkel 31b, der insofern einen Widerlagerkörper 57 bildet, zu vergrößern oder zu verkleinern. Dazu ist ein Schraubkörper 55 sozusagen in den Distanzkörper 43a, 43b hineingeschraubt. Der Schraubkörper 55 ist als ein Hülsenkörper 56 ausgestaltet. Weiterhin ist der Schraubkörper 55 vorliegend ein integraler Bestandteil des Handgriffkörpers 51a, 51b, d.h. mit diesem einstückig. Der Schraubkörper 55 bildet einen Schraubfortsatz 72 des Handgriffkörpers 51a, 51b.

Es versteht sich, dass auch eine mehrteilige Bauweise möglich ist, bei der beispielsweise ein Schraubkörper drehfest mit dem jeweiligen Handgriffkörper und/oder der Mutter verbunden ist.

Letztlich stellt also der Handgriffkörper 51a, 51b eine drehfeste Verbindung zwischen einerseits der Mutter 48 und andererseits dem Schraubkörper 55 bereit.

Der Schraubkörper 55 weist an seinem Außenumfang einen Gewindeabschnitt 58 auf, der insoweit einen zweiten Gewindeabschnitt der Mutteranordnung 42a oder 42b bildet. Der zweite Gewindeabschnitt 58 kämmt mit einem Distanzkörper-Gewindeabschnitt 59 des Distanzkörpers 43a, 43b. Der Distanzkörper-Gewindeabschnitt 59 ist an einem Hülsenabschnitt 60 des Distanzkörpers 43a, 43b vorgesehen. Mithin greift also der Schraubkörper 55 in den Innenraum des Hülsenabschnittes 60 ein bzw. ist in diesen einschraubbar. Weiterhin wird der Schraubkörper 55 vom Zuganker 41 durchdrungen.

Die Gewindeabschnitte 58, 59 weisen jedoch eine andere Drehrichtung auf als die Gewindeabschnitte 46, 49. Beispielsweise sind die beiden Gewindeabschnitte 46, 49 Rechtsgewinde in konventioneller Art, während die Gewindeabschnitte 58, 59 Linksgewinde sind. Dadurch wird folgende Funktionsweise möglich:

Wenn die Mutteranordnung 42a, 42b im Sinne eines Spannens drehbetätigt wird, bewegt sich nicht nur die Mutter 48 auf den Widerlagerkörper 57 zu, sondern sozusagen mit "doppelter Geschwindigkeit" auch der Distanzkörper 43a, 43b.

Die vorgenannte "doppelte Geschwindigkeit" ergibt sich dadurch, dass die Gewindeabschnitte 46, 49, 58 und 59 die gleiche Steigung aufweisen.

Es könnte aber auch eine Anordnung so getroffen sein, dass bei einer erfindungsgemäßen Spannvorrichtung die Mutter sozusagen vom Widerlagerkörper weggeschraubt wird, während bei der gleichen Spann-Drehbetätigung der Distanzkörper in Richtung des Widerlagerkörpers geschraubt wird. Auch dadurch ergibt sich der doppelte Spannhub im Vergleich zu einem einzigen Gewinde.

In jedem Fall erfolgt das Spannen entlang einer Spannachse 61 mit Hilfe der erfindungsgemäßen Spannvorrichtungen 40a, 40b wesentlich schneller und komfortabler als mit einer konventionellen Spanntechnik.

Damit der Distanzkörper 43a, 43b drehfest gehalten wird, könnte beispielsweise von außen her eine Drehsicherung 62 auf ihn wirken. Die Drehsicherung könnte beispielsweise mit axialem Spiel oder axialer Beweglichkeit in eine in der Zeichnung nicht dargestellte Nut am Distanzkörper 43a eingreifen. Beim Ausführungsbeispiel ist jedoch eine alternative Lösung gewählt:

An der dem Widerlagerkörper 57 zugewandten Seite ist am Hülsenabschnitt 60 des Distanzkörpers 43a, 43b ein kragenartiger Vorsprung 63 angeordnet. Weiterhin hat der Distanzkörper 43a, 43b an seiner dem Widerlagerkörper 57 zugewandten Seite eine Aufnahme 64 für einen Vorsprung 65 des Widerlagerkörpers 57. Der Vorsprung 65 ist konisch, die Aufnahme 64 dazu passend ebenfalls. Der Vorsprung 63 steht in der Art eines Kragens radial vor den Hülsenabschnitt 60 vor und ist zudem an dessen Stirnseite angeordnet. Somit hat also der Distanzkörper 43a, 43b eine breite Stützbasis zum Abstützen am Widerlagerkörper 57.

Diese Stützbasis, die also einen konischen Stützflächenbereich aufweist, wird zudem als Verdrehsicherung genutzt. Nun könnte man beispielsweise den inneren, konischen Flächenabschnitt und/oder den Vorsprung 63 mit einer "Antirutsch-Beschichtung" versehen, beispielsweise mit einer Gummierung oder dergleichen. Beim Ausführungsbeispiel ist jedoch ein anderer Weg gewählt.

An der von dem Lagerkörper 34 abgewandten Seite haben die Klammerschenkel 31a, 31b jeweils eine Verstärkungsstruktur. Dabei verlaufen Verstärkungsrippen 66 sternförmig von einer Durchtrittsöffnung weg, durch die der Zuganker 41 gesteckt ist.

Die Verstärkungsrippen 66 haben zunächst die Funktion, die plattenartigen Bereiche der Klammerschenkel 31a, 31b zu verstärken, so dass die mechanische Belastbarkeit der Konfiguration erhöht ist.

Dazu kommt allerdings noch eine Zusatzfunktion für die Spannvorrichtungen 40a, 40b, nämlich eine Verdrehsicherung oder die Funktion eines Gegenhalts 70. Die Verstärkungsrippen 66 sind nämlich Vorsprünge 77 und somit Formschlusskonturen 67, die zum Eingriff in korrespondierende Formschlusskonturen 68 an den Distanzkörpern 43a, 43b vorgesehen sind. Die Formschlusskonturen 68 sind bei den Distanzkörpern 43a stirnseitig am Vorsprung 63 vorgesehene Nuten. Beim Distanzkörper 43b hingegen sind die Formschlusskonturen 68 als Schlitze ausgestaltet, in die die Verstärkungsrippen 66 eingreifen können. Jedenfalls sind die Formschlusskonturen 68 vorliegend Ausnehmungen 78.

Selbstverständlich können anders als in den Figuren 3 und 4 dargestellt auch mehr als vier entsprechende Schlitze beim Distanzkörper 43b vorgesehen sein, jedenfalls entsprechend so viel Schlitze, wie Verstärkungsrippen 66, vorgesehen sind.

An dieser Stelle sei erwähnt, dass eine Verdrehsicherung des Distanzkörpers bezüglich des Widerlagerkörpers bei einer erfindungsgemäßen Spannvorrichtung auch durch andersartigen Formschluss realisiert sein kann. Beispielsweise könnten auch bolzenartige Vorsprünge und dazu passende Löcher am Distanzkörper und am Widerlagerkörper oder umgekehrt vorgesehen sein.

Es versteht sich, dass man ohne Weiteres an Stelle der Spannmutter 28 eine der beiden Mutteranordnungen 42a, 42b verwenden könnte, die ein schnelleres Spannen oder Lösen der Klemmschellen 24 und Spannklammern 27 ermöglichen.

Auch auf dem Anwendungsgebiet der Anhängekupplungen kann die Erfindung mit Vorteil verwendet werden. Beispielsweise könnte man sich eine Steckdose einer Anhängekupplung vorstellen, die mittels einer erfindungsgemäßen Spannvorrichtung am Heck des Kraftfahrzeuges, am Kupplungsarm oder einer sonstigen geeigneten Stelle schnell und effektiv befestigt werden kann und auch wieder leicht entfernbar ist.

Weiterhin ist es denkbar, dass man beispielsweise eine Betätigungseinrichtung einer Anhängekupplung mit der erfindungsgemäßen Spannvorrichtung schnell und ohne großen Aufwand an einer Haltebasis des Kraftfahrzeuges befestigt und auch wieder lösen kann.

Ein weiteres Anwendungsgebiet könnte auch eine Verriegelung oder Verspannung des Kugelhalses bezüglich einer fahrzeugfesten Halterung sein, wobei der Kugelhals beispielsweise aus der Halterung entnehmbar sein kann oder auch an dieser beweglich, insbesondere schwenkbeweglich, gelagert sein kann. Auch hier ist mit Vorteil das Lösen und Spannen mittels einer erfindungsgemäßen Spannvorrichtung einsetzbar.

## Patentansprüche

1. Spannvorrichtung für einen Kraftfahrzeug-Träger (10), insbesondere einen Fahrradträger, oder eine Anhängekupplung (92), mit einem Zuganker (41) und einer auf diesen aufschraubbaren Mutteranordnung (42a; 42b), die drehbetätigbar ist und einen mit einem Zuganker-Gewindeabschnitts (46) des Zugankers (41) kämmenden ersten Gewindeabschnitt (49) aufweist, um sie entlang einer Spannachse (61) axial zu einem Widerlagerkörper (57) hin in eine Spannstellung oder von diesem weg in eine Lösestellung zu verstellen, wobei zwischen dem Widerlagerkörper (57) und der Mutteranordnung (42a; 42b) ein Distanzkörper (43a; 43b) angeordnet ist, **dadurch gekennzeichnet, dass** der Distanzkörper (43a; 43b) einen Distanzkörper-Gewindeabschnitt (59) mit einer zu der ersten Drehrichtung entgegengesetzten Drehrichtung aufweist, mit dem ein zu dem ersten Gewindeabschnitt (49) koaxialer zweiter Gewindeabschnitt (58) der Mutteranordnung (42a; 42b) kämmt, und dass zwischen dem Distanzkörper (43a; 43b) und einem Gegenhalt (70), insbesondere dem Widerlagerkörper (57), ein entgegen einer Drehbetätigung wirksamer Reibschluss und/oder Formschluss vorhanden ist, so dass sich die Mutteranordnung (42a; 42b) bei einer Drehbetätigung simultan an dem Distanzkörper (43a; 43b) und dem Zuganker (41) entlang schraubt und dadurch eine Distanz zu dem Widerlagerkörper (57) entlang der Spannachse (61) verändert.

2. Spannvorrichtung nach Anspruch 1, **dadurch gekennzeichnet, dass** der erste Gewindeabschnitt (49) an einer Mutter (48) der Mutteranordnung (42a; 42b) und der zweite Gewindeabschnitt (58) an einem mit der Mutter (48) drehfest verbundenen Schraubkörper (55) der Mutteranordnung (42a; 42b) vorgesehen sind und/oder dass der erste Gewindeabschnitt (49) der Mutteranordnung (42a; 42b) ein Rechtsgewinde und der zweite Gewindeabschnitt (58) ein Linksgewinde bilden und/oder dass der erste Gewindeabschnitt (49) der Mutteranordnung (42a; 42b) ein Innengewindeabschnitt und der zweite Gewindeabschnitt (58) ein Außengewindeabschnitt ist oder umgekehrt und/oder dass mindestens einer der Gewindeabschnitte (46, 48, 58, 59) eine Selbsthemmung aufweist.

3. Spannvorrichtung nach Anspruch 1 oder 2, **dadurch gekennzeichnet, dass** der Schraubkörper (55) einen von dem Zuganker (41) durchdrungenen Hülsenkörper (56) umfasst, an dessen Außenumfang der Distanzkörper-Gewindeabschnitt (59) angeordnet ist und/oder dass die Mutteranordnung (42a; 42b) einen vor einen Hülsenabschnitt (60) radial außen vorstehenden Vorsprung, insbesondere einen Kragen oder Ringvorsprung, zum Abstützen an dem Widerlagerkörper (57) aufweist.

4. Spannvorrichtung nach einem der vorhergehenden Ansprüche, **dadurch gekennzeichnet, dass** an dem Distanzkörper (43a; 43b) und dem Widerlagerkörper (57) zueinander passende Formschlusskonturen (67, 68) und/oder Drehanschläge vorgesehen sind und/oder dass mindestens eine Formschlusskontur (67, 68) des Widerlagerkörpers (57) oder der Mutteranordnung (42a; 42b) durch eine Verstärkungsrippe (66) gebildet ist.

5. Spannvorrichtung nach einem der vorhergehenden Ansprüche, **dadurch gekennzeichnet, dass** der Widerlagerkörper (57) zum formschlüssigen Halt des Distanzkörpers (43a; 43b) mindestens einen bezüglich des Zugankers (41) radial verlaufenden Vorsprung (77) oder mehrere sternförmige Vorsprünge zum Eingriff in Ausnehmungen (78) des Distanzkörpers (43a; 43b) aufweist.

6. Spannvorrichtung nach einem der vorhergehenden Ansprüche, **dadurch gekennzeichnet, dass** ein Stützflächenbereich der Mutteranordnung (42a; 42b) zum Abstützen an dem Widerlagerkörper (57) an einer konischen Aufnahme (64) vorgesehen ist.

7. Spannvorrichtung nach einem der vorhergehenden Ansprüche, **dadurch gekennzeichnet, dass** der Zuganker (41) bezüglich des Widerlagerkörpers (57) drehfest festgelegt ist und/oder dass der Zuganker (41) einen Spannbolzen (47) umfasst oder von einem Spannbolzen (47) gebildet ist und/oder dass der Widerlagerkörper (57) von dem Zuganker (41) durchdrungen ist oder dass der Zuganker (41) einen Bestandteil des Widerlagerkörpers (57) bildet.

8. Spannvorrichtung nach einem der vorhergehenden Ansprüche, **dadurch gekennzeichnet, dass** sie eine Spannklammer (30) aufweist, wobei die Spannklammer (30) mit der Mutteranordnung (42a; 42b) zwischen einer Klemmstellung und einer Freigabestellung verstellbar ist und/oder wobei die Spannklammer (30) den Widerlagerkörper (57) bildet und/oder wobei die Spannklammer (30) als eine Klemmschelle ausgestaltet ist.

9. Spannvorrichtung nach Anspruch 8, **dadurch gekennzeichnet, dass** die Spannklammer (30) ein Drehlager (35) für ein zu spannendes, von der Spannklammer (30) aufgenommenes Bauteil umfasst, das bezüglich der Spannklammer (30) in der Lösestellung der Spannvorrichtung (40a; 40b) drehbar und in deren Spannstellung drehfest festgelegt ist.

10. Spannvorrichtung nach Anspruch 9, **dadurch gekennzeichnet, dass** das Drehlager (35) eine Steckaufnahme (36) für das zu spannende Bauteil aufweist und/oder dass der Zuganker (41) eine Lagerachse (71) des Drehlagers (35) bildet.

11. Spannvorrichtung nach einem der vorhergehenden Ansprüche, **dadurch gekennzeichnet, dass** das zu spannende Bauteil eine Stange oder ein Bügel (17) eines Kraftfahrzeug-Trägers (10) ist.

12. Spannvorrichtung nach einem der vorhergehenden Ansprüche, **dadurch gekennzeichnet, dass** ein Handgriffkörper (51a; 51b) mit der Mutter (48) drehfest verbunden ist oder dass die Mutter (48) als Handgriffkörper (51a; 51b) ausgebildet ist.

13. Spannvorrichtung nach Anspruch 12, **dadurch gekennzeichnet, dass** der Handgriffkörper (51a; 51b) einen Schraubfortsatz (72) aufweist, der in den Distanzkörper (43a; 43b) eindringt oder in den der Distanzkörper (43a; 43b) eindringt und/oder dass der Handgriffkörper (51a; 51b) einen Drehknauf (54) aufweist.

14. Kraftfahrzeug-Träger (10), insbesondere Heckträger und/oder Fahrradträger, mit mindestens einer Spannvorrichtung (40a; 40b) nach einem der vorhergehenden Ansprüche, wobei der Kraftfahrzeug-Träger (10) vorzugsweise eine aus einem Heck des Kraftfahrzeugs (90) ausziehbare Schublade ist oder aufweist und/oder wobei der Kraftfahrzeug-Träger (10) zweckmäßigerweise eine Halterung (22) zur Befestigung an dem Kraftfahrzeug (90), insbesondere eine Kupplungshalterung zur Befestigung an einer Anhängekupplung (92), aufweist.

15. Anhängekupplung (92), insbesondere Betätigungsvorrichtung der Anhängekupplung (92), mit mindestens einer Spannvorrichtung (40a; 40b) nach einem der Ansprüche 1 bis 13

## Claims

1. Clamping device for a motor vehicle carrier (10), in particular a bicycle carrier, or for a trailer coupling (92), comprising a tie rod (41) and a nut arrangement (42a; 42b) which can be screwed onto the former, which is capable of rotary operation and which has a first thread section (49) meshing with a tie rod thread section (46) of the tie rod (41) for adjustment along a clamping axis (61) axially towards an abutment body (57) into a clamping position or away from the abutment body (57) into a release position, with a spacer body (43a; 43b) being arranged between the abutment body (47) and the nut arrangement (42a; 42b), **characterised in that** the spacer body (43a; 43b) comprises a spacer body thread section (59) with a direction of rotation opposed to the first direction of rotation, with which thread section (59) a second thread section (58) of the nut arrangement (42a; 42b), which is coaxial with the first thread section (49), meshes, and **in that** between the spacer body (43a; 43b) and a dolly (70), in particular the abutment body (57), there is frictional contact and/or positive engagement acting against a rotary operation, so that the nut arrangement (42a; 42b) is in a rotary operation simultaneously screwed along the spacer body (43a; 43b) and the tie rod (41), thereby changing a distance from the abutment body (57) along the clamping axis (61).

2. Clamping device according to claim 1, **characterised in that** the first thread section (49) is provided on a nut (48) of the nut arrangement (42a; 42b) and the second thread section (58) is provided on a screw body (55) of the nut arrangement (42a; 42b) which is non-rotatably joined to the nut (48), and/or **in that** the first thread section (49) of the nut arrangement (42a; 42b) has a right-hand thread and the second thread section (58) has a left-hand thread, and/or **in that** the first thread section (49) of the nut arrangement (42a; 42b) is a female thread section and the second thread section (58) is a male thread section or vice versa, and/or **in that** at least one of the thread sections (46, 48, 58, 59) has a self-retention.

3. Clamping device according to claim 1 or 2, **characterised in that** the screw body (55) comprises a sleeve body (56) through which the tie rod (41) passes and on the outer circumference of which the spacer body thread section (59) is provided, and/or **in that** the nut arrangement (42a; 42b) has a projection protruding radially outwards in front of a sleeve section (60), in particular a collar or an annular projection, for support on the abutment body (57).

4. Clamping device according to any of the preceding claims, **characterised in that** matching positive-locking contours (67, 68) and/or rotary stops are provided on the spacer body (43a; 43b) and on the abutment body (57), and/or **in that** at least one positive-locking contour (67, 68) of the abutment body (57) or the nut arrangement (42a; 42b) is represented by a reinforcing rib (66).

5. Clamping device according to any of the preceding claims, **characterised in that** the abutment body (57) comprises at least one projection (77) extending radially with respect to the tie rod (41) or a plurality of star-shaped projections for engagement with recesses (78) of the spacer body (43a; 43b) for the positive retention of the spacer body (43a; 43b).

6. Clamping device according to any of the preceding claims, **characterised in that** a support surface area of the nut arrangement (42a; 42b) is provided for support on the abutment body (57) at a conical receptacle (64).

7. Clamping device according to any of the preceding claims, **characterised in that** the tie rod (41) is non-rotatably located with respect to the abutment body (57), and/or **in that** the tie rod (41) comprises a clamping bolt (47) or is represented by a clamping bolt (47), and/or **in that** the tie rod (41) passes through the abutment body (57) or **in that** the tie rod (41) forms a part of the abutment body (57).

8. Clamping device according to any of the preceding claims, **characterised in that** it comprises a clamp (30), wherein the clamp (30) can be adjusted between a clamping position and a release position with the nut arrangement (42a; 42b), and/or wherein the clamp (30) forms the abutment body (57), and/or wherein the clamp (30) is designed as a clamping bracket.

9. Clamping device according to claim 8, **characterised in that** the clamp (30) comprises a pivot bearing (35) for a component to be clamped and held by the clamp (30), which component is held rotatably with respect to the clamp (30) in the release position of the clamping device (40a; 40b) and non-rotatably in its clamping position.

10. Clamping device according to claim 9, **characterised in that** the pivot bearing (35) comprises a socket (36) for the component to be clamped, and/or **in that** the tie rod (41) forms a bearing axis (71) of the pivot bearing (35).

11. Clamping device according to any of the preceding claims, **characterised in that** the component to be clamped is a bar or a bow (17) of a motor vehicle carrier (10).

12. Clamping device according to any of the preceding claims, **characterised in that** a handle body (51a; 51b) is non-rotatably joined to the nut (48), or **in that** the nut (48) is designed as a handle body (5 1 a; 51b).

13. Clamping device according to claim 12, **characterised in that** the handle body (51a; 51b) has a screw extension (72) which penetrates into the spacer body (43a; 43b) or into which the spacer body (43a; 43b) penetrates, and/or **in that** the handle body (51a; 51b) has a rotary knob (54).

14. Motor vehicle carrier (10), in particular rear end carrier and/or bicycle carrier, comprising at least one clamping device (40a; 40b) according to any of the preceding claims, wherein the motor vehicle carrier (10) preferably is or comprises a drawer which can be pulled out of the rear end of the motor vehicle (90), and/or wherein the motor vehicle carrier (10) expediently comprises a fastening device (22) for mounting on the motor vehicle (90), in particular a coupling fastening device for mounting on a trailer coupling (92).

15. Trailer coupling (92), in particular operating device of the trailer coupling (92), comprising at least one clamping device (40a; 40b) according to any of claims 1 to 13.

## Revendications

1. Dispositif de serrage pour un support de véhicule automobile (10), en particulier un support de bicyclettes, ou pour un accouplage de remorque (92), comprenant un tirant (41) et un ensemble d'écrous (42a ; 42b) pouvant être vissé sur ledit tirant, lequel ensemble d'écrous peut être actionné par rotation et qui présente une première section filetée (49) venant en prise avec une section filetée de tirant (46) du tirant (41) afin de déplacer ladite section filetée le long d'un axe de serrage (61) de manière axiale en direction d'un corps de contre-palier (57), dans une position serrée ou dans une position desserrée à distance de ce dernier, sachant qu'est disposé entre le corps de contre-palier (57) et l'ensemble d'écrous (42a ; 42b) un corps d'espacement (43a ; 43b), **caractérisé en ce que** le corps d'espacement (43a ; 43b) présente une section filetée de corps d'espacement (59) présentant une direction de rotation opposée à la première direction de rotation, une deuxième section filetée (58) de l'ensemble d'écrous (42a ; 42b) coaxiale par rapport à la première section filetée (49) venant en prise avec ladite section filetée de corps d'espacement, et **en ce qu'**est présent entre le corps d'espacement (43a ; 43b) et une contre-bouterolle (70), en particulier le corps de contre-palier (57), un élément de liaison de friction et/ou un élément de complémentarité de forme agissant contre l'actionnement par rotation, de sorte que l'ensemble d'écrous (42a ; 42b) se visse dans le cas d'un actionnement par rotation simultanément le long du corps d'espacement (43a ; 43b) et du tirant (41), modifiant ainsi l'espacement par rapport au corps de contre-palier (57) le long de l'axe de serrage (61).

2. Dispositif de serrage selon la revendication 1, **caractérisé en ce que** la première section filetée (49) est prévue au niveau d'un écrou (48) de l'ensemble d'écrous (42a ; 42b) et la deuxième section filetée (58) est prévue au niveau d'un corps à visser (55) de l'ensemble d'écrous (42a ; 42b), relié de manière solidaire en rotation à l'écrou (48), et/ou **en ce que** la première section filetée (49) de l'ensemble d'écrous (42a ; 42b) forme un filetage droit et la deuxième section filetée (58) un filetage gauche, et/ou **en ce que** la première section filetée (49) de l'ensemble d'écrous (42a ; 42b) est une section filetée intérieure et la deuxième section filetée (58) une section filetée extérieure ou inversement, et/ou **en ce qu'**au moins une des sections filetées (46, 48, 58, 59) présente un dispositif de blocage automatique.

3. Dispositif de serrage selon la revendication 1 ou 2, **caractérisé en ce que** le corps à visser (55) comprend un corps de douille (56) traversé par le tirant (41), au niveau de la périphérie extérieure duquel est disposée la section filetée de corps d'espacement (59), et/ou **en ce que** l'ensemble d'écrous (42a ; 42b) présente une partie faisant saillie dépassant radialement vers l'extérieur d'une section de douille (60), en particulier un col ou une partie faisant saillie annulaire, destinée à venir en appui au niveau du corps de contre-palier (57).

4. Dispositif de serrage selon l'une quelconque des revendications précédentes, **caractérisé en ce que** des contours de complémentarité de forme (67, 68) et/ou des butées rotatives s'adaptant les uns aux autres sont prévus au niveau du corps d'espacement (43a ; 43b) et du corps de contre-palier (57), et/ou **en ce qu'**au moins un contour de complémentarité de forme (67, 68) du corps de contre-palier (57) ou de l'ensemble d'écrous (42a ; 42b) est formé par une nervure de renforcement (66).

5. Dispositif de serrage selon l'une quelconque des revendications précédentes, **caractérisé en ce que** le corps de contre-palier (57) présente aux fins du maintien par complémentarité de forme du corps d'espacement (43a ; 43b) au moins une partie faisant saillie (77) s'étendant radialement par rapport au tirant (41) ou plusieurs parties faisant saillie en forme d'étoile destinées à venir en prise avec des évidements (78) du corps d'espacement (43a ; 43b).

6. Dispositif de serrage selon l'une quelconque des revendications précédentes, **caractérisé en ce qu'**une zone de surface d'appui de l'ensemble d'écrous (42a ; 42b) est prévue pour venir en appui au niveau du corps de contre-palier (57) au niveau d'un logement (64) conique.

7. Dispositif de serrage selon l'une quelconque des revendications précédentes, **caractérisé en ce que** le tirant (41) est fixé de manière solidaire en rotation par rapport au corps de contre-palier (57), et/ou **en ce que** le tirant (41) comprend un boulon de serrage (47) ou est formé par un boulon de serrage (41), et/ou **en ce que** le corps de contre-palier (57) est traversé par le tirant (41), ou **en ce que** le tirant (41) constitue une partie intégrante du corps de contre-palier (57).

8. Dispositif de serrage selon l'une quelconque des revendications précédentes, **caractérisé en ce qu'**il présente une bride de serrage (30), sachant que la bride de serrage (30) peut être déplacée avec l'ensemble d'écrous (42a ; 42b) entre une position fixe et une position débloquée et/ou sachant que la bride de serrage (30) constitue le corps de contre-palier (57) et/ou que la bride de serrage (30) est configurée sous la forme d'un collier de fixation.

9. Dispositif de serrage selon la revendication 8, **caractérisé en ce que** la bride de serrage (30) comprend un palier rotatif (35) pour un élément logé par la bride de serrage (30), devant être serré, lequel est fixé par rapport à la bride de serrage (30) de manière à pouvoir tourner dans la position desserrée du dispositif de serrage (40a ; 40b) ou de manière solidaire en rotation dans la position serrée de ce dernier.

10. Dispositif de serrage selon la revendication 9, **caractérisé en ce que** le palier rotatif (35) présente un logement d'enfichage (36) pour l'élément devant être serré, et/ou **en ce que** le tirant (41) constitue un axe de palier (71) du palier rotatif (35).

11. Dispositif de serrage selon l'une quelconque des revendications précédentes, **caractérisé en ce que** l'élément devant être serré est une tige ou un étrier (17) d'un support de véhicule automobile (10).

12. Dispositif de serrage selon l'une quelconque des revendications précédentes, **caractérisé en ce qu'**un corps de poignée (51a; 51 b) est relié de manière solidaire en rotation à l'écrou (48), ou **en ce que** l'écrou (48) est réalisé sous la forme d'un corps de poignée (51 a ; 51 b).

13. Dispositif de serrage selon la revendication 12, **caractérisé en ce que** le corps de poignée (51a; 51b) présente un prolongement à visser (72), qui pénètre dans le corps d'espacement (43a ; 43b) ou dans lequel le corps d'espacement (43a ; 43b) pénètre, et/ou **en ce que** le corps de poignée (51 a, 51 b) présente un bouton rotatif (54).

14. Support de véhicule automobile (10), en particulier support arrière et/ou un support de bicyclettes, comprenant au moins un dispositif de serrage (40a ; 40b) selon l'une quelconque des revendications précédentes, sachant que le support de véhicule (10) est ou présente de préférence un tiroir éjectable d'un hayon de véhicule automobile (90), et/ou sachant que le support de véhicule automobile (10) présente de manière appropriée un support (22) destiné à être fixé au niveau du véhicule automobile (90), en particulier un support d'attelage destiné à être fixé au niveau d'un attelage de remorque (92).

15. Attelage de remorque (92) en particulier dispositif d'actionnement de l'attelage de remorque (92), comprenant au moins un dispositif de serrage (40a ; 40b) selon l'une quelconque des revendications 1 à 13.
